# EUROPEAN PATENT SPECIFICATION

(11) **EP 3 915 889 B1**
(45) Date of publication and mention of the grant of the patent: **09.10.2024**
(21) Application number: 21177396.5
(22) Date of filing: 02.05.2018
(51) Int. Cl.: B65B 35/44, B65B 59/00, B65B 65/00, B65G 21/14, B65G 47/52, B65B 5/06, B65B 11/08

(54) **PACKAGING MACHINE AND METHOD OF PACKAGING PRODUCTS**
VERPACKUNGSMASCHINE UND VERFAHREN ZUR VERPACKUNG VON PRODUKTEN
MACHINE D'EMBALLAGE ET PROCÉDÉ D'EMBALLAGE DE PRODUITS

(30) Priority: 03.05.2017 DE 102017109470
(43) Date of publication of application: 01.12.2021
(62) Divisional of application: 18726005.4
(73) Proprietor: Illinois Tool Works, Inc., Glenview, Illinois 60025 (US)
(72) Inventor: WÖHLE, Linus, Glenview, Illinois, 60025 (US)
(74) Representative: Meissner Bolte Partnerschaft mbB

(56) References cited:
- WO-A1-2013/115862
- WO-A2-2014/204583
- WO-A2-2016/042439

## Description

The present invention relates to a packaging machine for packaging products, and to a corresponding packaging method.

In particular, the invention preferably (but not exclusively) relates to so-called secondary packaging machines, which are embodied for producing packages, in particular large packages (multipacks), specifically by wrapping objects, in particular already-packaged products, that are combined to form a multipack, in cardboard material and/or film material.

The term "packaging machine" used here also encompasses the term "grouping device" per se, or as a component of a larger system. For example, the packaging machines are a component of a filling line, which in general is situated inside a manufacturing facility.

Individually packaged products such as beverages packaged in boxes, or flour or the like packaged in bags, are then combined into larger multipacks to ease of transport. To that end, the products are fed together in a packaging machine and combined, by appropriate control of the transport belts, into groups of the desired size. Such a multipack can then be produced, for example, by introducing a plurality of products into a single package made of cardboard, or by wrapping them in film that is then shrunk, resulting in a stable multipack.

US 2002/0189204 A1, for example, has disclosed a method of wrapping products with a shrink-wrap film and an apparatus for this.

A wide variety of package types exist for processing, assembling, grouping, and packaging products such as beverages contained in boxes or flour or the like packaged in bags. Particularly with products that are not entirely dimensionally stable, such as PET beverage containers, it is necessary for the sake of improved logistical handling to provide these products in a grouped arrangement with a cardboard pack. Optionally, these multipack arrangements can then be sheathed with film and the film can be shrunk by means of a heating process, in order to obtain a stable composite multipack, which can be easily transported and stacked.

A further multipack variant is called "shrink-only" since in this case, the assembled products are wrapped with film without further cardboard packaging and the film is shrunk into place. The dimensional stability of this multipack variant is ensured solely by the shrink-wrap film.

In another type of packaging, the assembled products are provided only with a cardboard pack; in this case, the wrapping of the resulting multipacks in film is omitted.

The document WO 2013/115862 A1 relates to a packaging system for packaging on or more articles. The packaging system comprises two or more devices each for performing at least one packaging operation upon on or more articles. Each of the two or more packaging devices is coupled to one another in a linear series by a first conveyor. The system further comprises at least one bypass conveyor providing a forward bypass path and/or a reverse bypass path for bypassing one or more of the devices in a forward and/or reverse direction.

Known packaging machines and their conveying devices are normally each optimized for a particular type, size, and/or contour of products as well as particular multipack and packaging types. In particular, it must be taken into account that different multipack and packaging types require different conveying devices. Under some circumstances, a change of product can result in the fact that certain conveying devices can no longer be used, for example since they are not suitable for conveying individual articles or containers. Problems in conveying the articles can also occur if the packaging machines are each set up for a different product variant.

Such conveying problems can occur especially when a switch is made between packaged goods, such as multipack units, and loose goods, such as individual beverage containers or the like.

The object of the present invention is to provide a packaging machine that is embodied for packaging products selectively in cardboard material and/or film material in which the packaging machine ensures simple, fast, and flexible retrofitting to different packaging types and flexible expansion to other packaging types.

A corresponding packaging method should also be disclosed.

The object of the invention is attained with regard to the packaging machine by the subject of independent claim 1 and with regard to the packaging method by the subject of the other independent claim 11; corresponding advantageous refinements of the packaging machine of the invention are disclosed in dependent claims 2 through 10 and a corresponding advantageous refinement of the packaging method of the invention is disclosed in dependent claim 12.

Accordingly, the present invention relates in particular to a packaging machine for selectively packaging products in cardboard material and/or film material, in which the packaging machine has a product inlet on the inlet side for supplying products to be packaged, and an outlet-side multipack outlet situated downstream of the product inlet in the product-transporting direction for discharging multipacks that have been produced in the packaging machine.

A cardboard-packaging station and a film-packaging station, the latter situated downstream of the cardboard-packaging station in the product-transporting direction, are arranged between the product inlet and the multipack outlet of the packaging machine. The cardboard-packaging station is embodied for packaging the products, which are fed to the cardboard-packaging station, with cardboard material, for example by wrapping the products in one or more cardboard blanks.

The film-packaging station is embodied in the same way for wrapping the products, which are fed to the film-packaging station, with a shrink-wrap or stretch film.

In order to enable simple, fast and in particular also tool-free, flexible retrofitting of the packaging machine for different packaging types, according to the invention, the packaging machine in particular has a product bypass, which is embodied for selectively feeding products, which are supplied to the product inlet of the packaging machine, directly to the film-packaging station, specifically by bypassing the cardboard-packaging station.

According to embodiments of the packaging machine of the invention, the cardboard-packaging station has a pack feeder for feeding empty cardboard packs, a product feeder for feeding products to be packaged in the cardboard-packaging station, and a cardboard-material outlet for carrying away products packaged with cardboard material in the cardboard-packaging station. In this connection, it is especially conceivable for the cardboard-packaging station to also have a loading station that is embodied for packaging products, which are fed via the product feeder, into empty cardboard packs and thus to supply multipacks.

In other embodiments of the packaging machine according to the invention, the cardboard-packaging station does not have a pack feeder for feeding empty cardboard packs, but rather a packaging-material feeder for feeding cardboard blanks. In these alternative embodiments, no loading station is provided; instead, the cardboard-packaging station has appropriate folder elements, which are embodied to form cardboard packs out of the fed cardboard blanks, which cardboard packs at least regionally envelop products, which are fed via the product feeder.

In principle, however, the cardboard-packaging station of the packaging machine of the invention has a horizontal conveying direction, in order to correspondingly convey (a) products fed to the cardboard-packaging station via the product feeder, (b) empty cardboard packs fed via the pack feeder, or cardboard blanks fed via the packaging-material feeder, and/or (c) cardboard multipacks.

For the product bypass that is embodied for selectively feeding products, which are supplied at the product inlet of the packaging machine, directly to the film-packaging station, specifically by bypassing the cardboard-packaging station, various embodiments exist. In some aspects of the present disclosure, the product bypass has a conveying device (for example in the form of a horizontal conveying device) with at least one transport belt that is, or can be, driven in the product-transporting direction, preferably in revolving fashion. The construction and functionality of the product bypass will be described below in terms of the various operating modes in which the packaging machine of the invention can be operated:

In a first operating mode of the packaging machine, in which cardboard tray/film multipacks are supplied at the multipack outlet of the packaging machine, the conveying device of the product bypass connects the cardboard-material outlet of the cardboard-packaging station to the multipack outlet of the packaging machine in such a way that products packaged with cardboard material in the cardboard-packaging station can be transported through the film-packaging station to the multipack outlet of the packaging machine where they can be discharged in the form of cardboard tray/film multipacks.

In another, second operating mode of the packaging machine, in which the products are discharged at the multipack outlet of the packaging machine in the form of film multipacks, the conveying device of the product bypass connects the product inlet of the packaging machine to the multipack outlet of the packaging machine in such a way that products supplied from the product inlet of the packaging machine can be transported through the film-packaging station to the multipack outlet of the packaging machine, specifically without passing through the cardboard-packaging station or without being wrapped in cardboard material in the cardboard-packaging station, so that in the end, the products can discharged at the multipack outlet of the packaging machine in the form of film multipacks (without a cardboard tray).

In another, third operating mode of the packaging machine, in which the products are discharged at the multipack outlet of the packaging machine in the form of cardboard tray/multipacks (without film wrapping), the transporting device of the product bypass connects the cardboard-material outlet of the cardboard-packaging station to the multipack outlet of the packaging machine in such a way that products, packaged in the cardboard-packaging station with cardboard material, can be transported to the multipack outlet of the packaging machine, specifically without passing through the film-packaging station or without being wrapped in film material in the film-packaging station, so that the products packaged with cardboard material in the cardboard-packaging station can be discharged at the multipack outlet of the packaging machine in the form of cardboard tray/multipacks.

In another, fourth operating mode of the packaging machine, in which the products supplied from the product inlet of the packaging machine are discharged as is, i.e. without cardboard or film packaging, at the multipack outlet of the packaging machine, the transporting device of the product bypass connects the product inlet of the packaging machine to the multipack outlet of the packaging machine in such a way that products supplied from the product inlet of the packaging machine can be transported to the multipack outlet of the packaging machine, specifically without passing through the cardboard-packaging station and the film-packaging station, i.e. without being wrapped in cardboard material in the cardboard-packaging station and without being wrapped in film material in the film-packaging station, so that the products supplied from the product inlet of the packaging machine can be discharged as is at the multipack outlet of the packaging machine.

In order to enable achieving the aforementioned various operating modes of the packaging machine, it is advantageous for the cardboard-packaging station and/or the film-packaging station of the packaging machine to be embodied such that it can be selectively switched on and off. Alternatively or in addition, it is conceivable, for example, for the components of the cardboard-packaging station that are provided for embodying the cardboard packs to be movable from a first, active position to a second, inactive position and vice versa in such a way that in the first, active position, products fed to the cardboard-packaging station via the product feeder are wrapped in cardboard material in the cardboard-packaging station, and that in the second, inactive position, products fed to the cardboard-packaging station via the product feeder are not wrapped in cardboard material in the cardboard-packaging station.

According to the invention, the transporting device has a first region, composed of at least one transport belt, which region connects the cardboard-material outlet of the cardboard-packaging station to the multipack outlet of the packaging machine, and also has a selectively activatable second region, which in the switched-on state lengthens the first region of the transporting device as far as the product inlet of the packaging machine, or connects a product-inlet end region of the first region of the transporting device to the product inlet of the packaging machine.

In this connection, it is in particular conceivable if the transporting device of the product bypass is embodied as a telescoping transport belt or has at least one telescoping transport belt; the selectively activatable second region of the transporting device is comprised, at least in some regions, by a telescoping region of the telescoping transport belt.

Various embodiments can also be used with regard to the film-packaging station of the packaging machine of the invention; it is conceivable in particular for the film-packaging station to have at least one bander for wrapping product units, which supplied from the film-packaging station, with film material (stretch or shrink-wrap film) that can be unwound from a supply roll.

As already indicated at the outset, the present invention further relates to a method of selectively packaging products in cardboard material and/or film material with the aid of the packaging machine according to the invention. To this end, the method has the following method steps:
- In a first operating mode of the packaging machine, the cardboard-material outlet of the cardboard-packaging station is connected with the aid of the transporting device of the product bypass to the multipack outlet of the packaging station in such a way that products packed with cardboard material in the cardboard-packaging station are transported through the film-packaging station to the multipack outlet of the packaging machine and discharged there in the form of cardboard tray/film multipacks;
- In a second operating mode of the packaging machine, the product inlet of the packaging machine is connected with the aid of the transporting device of the product bypass to the multipack outlet of the packaging machine in such a way that products supplied from the product inlet of the packaging machine are transported through the film-packaging station to the multipack outlet of the packaging machine, specifically without passing through the cardboard-packaging station or without being wrapped in cardboard material in the cardboard-packaging station, so that the products at the multipack outlet of the packaging machine are discharged in the form of film multipacks;
- In a third operating mode of the packaging machine, the cardboard-material outlet of the cardboard-packaging station is connected with the aid of the transporting device of the product bypass to the multipack outlet of the packaging machine in such a way that products packed with cardboard material in the cardboard-packaging station are transported to the multipack outlet of the packaging machine, specifically without passing through the film-packaging station or without being wrapped in film material in the film-packaging station, so that the products packed with cardboard material in the cardboard-packaging station are discharged at the multipack outlet of the packaging machine in the form of cardboard tray multipacks; and
- In a fourth operating mode of the packaging machine, the product inlet of the packaging machine is connected with the aid of the transporting device of the product bypass to the multipack outlet of the packaging machine in such a way that products supplied from the product inlet of the packaging machine are transported to the multipack outlet of the packaging machine, specifically without passing through the cardboard-packaging station and the film-packaging station or without being packed in cardboard material in the cardboard-packaging station and without being packed in film material in the film-packaging station, so that the products supplied from the product inlet of the packaging machine are discharged as is at the multipack outlet of the packaging machine.

The packaging machine of the invention particularly also features the fact that a grouped product pattern supplied at the product inlet of the machine can, as needed or selectively without change, pass through the individual packaging stations and be discharged as an unchanged grouped product pattern at the multipack outlet of the machine.

An exemplary embodiment of the packaging machine of the invention will be described in greater detail below with reference to the accompanying drawings.

In the drawings:
- FIG. 1: schematically and in an isometric view shows an exemplary embodiment of the packaging machine of the invention in its first operating mode; and
- FIG. 2: schematically and in an isometric view shows an exemplary embodiment of the packaging machine of the invention in its second operating mode.

The packaging machine 1 schematically depicted in the drawings is used to selectively pack products (not shown) in cardboard material and/or film material. For this purpose, the packaging machine 1 has an entry-side product inlet 2 for supplying the products to be packed and an exit-side multipack outlet 3, situated downstream of the product inlet 2 of the machine in the product-transporting direction T, at which multipack outlet the multipacks formed in the packaging machine 1 are discharged. Between the product inlet 2 and the multipack outlet 3 of the packaging machine 1, a cardboard-packaging station 4 and a film-packaging station 5 are provided (in the sequence of the product-transporting direction T).

First, the structure and functionality of the cardboard-packaging station 4, used in the exemplary embodiment of the packaging machine 1 of the invention, will be described in greater detail.

In detail, the schematically shown cardboard-packaging station 4 of the packaging machine 1 of the invention has a packaging material feeder for feeding cardboard blanks, and corresponding folder elements 9; these folder elements 9 are embodied for forming cardboard packs which at least in some regions, sheathe the products supplied to the cardboard-packaging station 4.

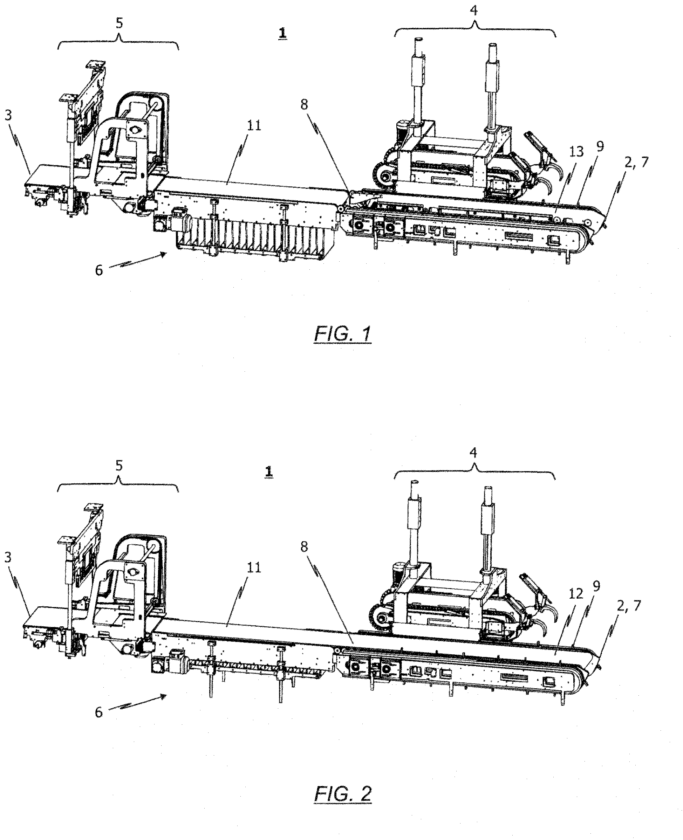

The transport path 13 of the cardboard-packaging station 4, which extends inside a machine frame of the packaging machine 1, includes a horizontal conveying device with a transporting means in the form of an endlessly revolving transport chain, which in the view in Fig. 1 is in an operationally ready state. The transport chain in the exemplary embodiment shown is provided with many folder elements 9, which serve as manipulating elements and are equipped or may function as folding fingers or dividing fingers. These manipulating elements or folder elements 9 embodied as folder fingers serve in particular, during the supplying of cardboard blanks (cardboard underlays) not shown here, to fold the side edges of these blanks upward, in order in this way to form so-called trays for the products being supplied. The products being fed to the cardboard-packaging station 4 are separate articles, multipacks, and/or packaging units.

The horizontal conveying device or transport means of the cardboard-packaging station 4, which conveying device or transport means forms the transport path 13, is embodied in multiple parts and has a dividing plane in the longitudinal or transporting direction T. The two parts, i.e. the right half and the left half of the horizontal conveying device, are joined together or spaced slightly apart from one another and function as a single horizontal conveying device or a single transport means, especially since the pathway sections revolving thereon are moved at synchronous revolving speeds.

The two halves of the horizontal conveying device can be pulled apart in the vicinity of the dividing plane in both lateral directions of the transport path 13 in order to establish the second operating mode and are thereby separated from one another. The resulting space enables insertion of a transport belt 12 of a product bypass 6; this transport belt 12 then forms the part of the transport path 13, which, in the first operating mode of the packaging machine 1, is formed by the separated and laterally displaced horizontal conveying device.

The aforementioned product bypass 6 of the exemplary embodiment of the packaging machine 1 of the invention has a transporting device with at least one transport belt 11, 12 that is or can be driven in the product-transporting direction T, preferably in revolving fashion. In detail, the transporting device of the product bypass 6 has a first region composed of at least one transport belt 11, which region connects the cardboard-material outlet 8 of the cardboard-packaging station 4 to the multipack outlet 3 of the packaging machine 1. The transporting device of the product bypass 6 also has a second region 12, which can be selectively activated and which in the activated state lengthens the first region 11 of the transporting device up to the product inlet 2 of the packaging machine 1, or connects an end of the first region, on the product inlet side, of the transporting device to the product inlet 2 of the packaging machine 1.

For this purpose, in the exemplary embodiment shown in the drawings, the transporting device of the product bypass 6 is embodied as a telescoping transport belt; the second region 12 of the transporting device that can be selectively activated is comprised in at least some regions by a telescoping region of the telescoping transport belt.

The depiction in Fig. 2 shows that in the activated state of the second region 12 of the transporting device of the product bypass 6, this telescoping region constitutes the transport path 13 of the cardboard-packaging station 4.

In the exemplary embodiment shown, the first region 11 of the transporting device of the product bypass 6 extends through the film-packaging station 5 as far as the exit side multipack outlet 3 of the packaging machine 1.

The film-packaging station 5 serves to wrap the products or multipacks, which are supplied via the transporting device of the product bypass 6, with film and then to discharge them via the multipack outlet 3 of the packaging machine 1. A roll onto which a film web is wound is supported below the frame of the packaging machine 1. The film web is conveyed in the direction of the transport belt to the film wrapping device via various deflecting and tensioning devices, which need not be explained in further detail here.

Upstream of the film wrapping device, a film cutting device can be provided, with which the film web is cut into individual lengths needed for wrapping a multipack in film.

The film wrapping device essentially comprises the transport belt 11, driven to revolve in the transporting direction T, which belt is guided via a plurality of deflection and tensioning rollers, not individually identified by reference numeral. A first bracket, projecting crosswise (in the plane of the drawing) along a first trajectory above the transport belt, is likewise driven at transporting speed with reference to the transporting direction T. On a second trajectory, a bracket likewise protruding crosswise (in the plane of the drawing) above the transport path is driven at a speed that is greater, with reference to the transporting direction T, than the transporting speed. The differing course of the trajectories above and below the transport belt is not shown in the drawings.

Fig. 1 shows a first operating mode of the packaging machine 1 in which cardboard tray/film multipacks are supplied. In this instance, the transporting device of the product bypass 6 connects the cardboard-material outlet 8 of the cardboard-packaging station 4 to the multipack outlet 3 of the packaging machine 1 in such a way that products packed with cardboard material in the cardboard-packaging station 4 can be transported through the film-packaging station 5 to the multipack outlet 3 of the packaging machine 1 and can be discharged there in the form of cardboard tray/film multipacks.

Fig. 2 shows a different, second operating mode of the packaging machine 1 in which the products are discharged at the multipack outlet 3 of the packaging machine 1 in the form of film multipacks. In this instance, the transporting device of the product bypass 6 connects the product inlet 2 of the packaging machine 1 to the multipack outlet 3 of the packaging machine 1 in such a way that products supplied from the product inlet 2 of the packaging machine 1 are transported through film-packaging station 5 to the multipack outlet 3 of the packaging machine 1, specifically without passing through the cardboard-packaging station 4 or without being wrapped in cardboard material in the cardboard-packaging station 4, so that in the end, the products can be discharged at the multipack outlet 3 of the packaging machine 1 in the form of film multipacks (without a cardboard tray).

In a different, third operating mode of the packaging machine 1, in which the products are discharged at the multipack outlet 3 of the packaging machine 1 in the form of cardboard tray multipacks (without film sheathing), the transporting device of the product bypass 6 connects the cardboard-material outlet 8 of the cardboard-packaging station 4 to the multipack outlet 3 of the packaging machine 1 in such a way that products packed with cardboard material in the cardboard-packaging station 4 can be transported to the multipack outlet 3 of the packaging machine 1, specifically without passing through the film-packaging station 5 or without being wrapped in film material in the film-packaging station 5, so that the products packed with cardboard material in the cardboard-packaging station 4 can be discharged at the multipack outlet 3 of the packaging machine 1 in the form of cardboard tray multipacks.

In still another, fourth operating mode of the packaging machine 1, in which the products supplied from the product inlet 2 of the packaging machine 1 are discharged as is, i.e. without cardboard or film packaging, at the multipack outlet 3 of the packaging machine 1, the transporting device of the product bypass 6 connects the product inlet 2 of the packaging machine 1 to the multipack outlet 3 of the packaging machine 1 in such a way that products supplied from the product inlet 2 of the packaging machine 1 can be transported to the multipack outlet 3 of the packaging machine 1, specifically without passing through the cardboard-packaging station 4 and the film-packaging station 5 or without being wrapped in cardboard material in the cardboard-packaging station 4 and without being wrapped in film material in the film-packaging station 5, so that the products supplied from the product inlet 2 of the packaging machine 1 can be discharged as is at the multipack outlet 3 of the packaging machine 1.

To enable achieving the aforementioned different operating modes of the packaging machine, it is advantageous that the cardboard-packaging station 4 and/or the film-packaging station 5 of the packaging machine 1 is/are embodied as selectively activatable and deactivatable. Alternatively or in addition to this, it is conceivable, for example, for the components of the cardboard-packaging station 4 that are provided for embodying the cardboard packs to be movable from a first, active position to a second, inactive position and vice versa, in such a way that in the first, active position, products that are fed via the product feeding of the cardboard-packaging station 4 are wrapped in cardboard material in the cardboard-packaging station 4, and that in the second, inactive position, products that are fed via the product feeder of the cardboard-packaging station 4 are not wrapped in cardboard material in the cardboard-packaging station 4.

According to preferred embodiments of the transporting device of the product bypass 6, the transporting device has a first region composed of at least one transport belt, which region connects the cardboard-material outlet 8 of the cardboard-packaging station 4 to the multipack outlet 3 of the packaging machine 1, and in addition to this, has a second region, which can be selectively switched on and which in the switched-on state lengthens the first region of the transporting device as far as the product inlet 2 of the packaging machine 1, or connects product-inlet end region of the first region of the transporting device to the product inlet 2 of the packaging machine 1.

In this context, it is especially conceivable, in the cardboard-packaging station 4, for the products to be placed in supplied empty cardboard boxes in order thus to form a multipack.

## Claims

1. Packaging machine (1) for optionally packaging products in cardboard material and/or film material, wherein the packaging machine (1) includes:
- an entry-side product inlet (2) for supplying products which are to be packaged;
- an exit-side multipack outlet (3) arranged downstream of the product inlet (2), as seen in the product-transporting direction (T), and adapted to deliver multipacks formed in the packaging machine (1);
- a cardboard-packaging station (4), which is arranged between the product inlet (2) and the multipack outlet (3), and a film-packaging station (5) arranged downstream of the cardboard-packaging station (4), as seen in the product-transporting direction (T); and
- a product bypass (6), adapted to supply products at the product inlet (2) which are optionally fed directly to the film-packaging station (5), bypassing the cardboard-packaging station (4) in the process,
wherein the product bypass (6) has a transporting device with at least one transporting belt (11, 12) which is adapted to be driven preferably in circulation in the product-transporting direction (T); and
wherein the packaging machine (1) can be operated in a first operating mode in which the transporting device of the product bypass (6) is adapted to connect the cardboard-material outflow (8) of the cardboard-packaging station (4) to the multipack outlet (3) of the packaging machine (1) such that products packaged in cardboard material in the cardboard-packaging station (4) can be transported through the film-packaging station (5) to the multipack outlet (3) of the packaging machine (1) and can be delivered there in the form of a cardboard-tray/film multipack; and
wherein the packaging machine (1) can be operated in a second operating mode, in which the transporting device of the product bypass (6) is adapted to connect the product inlet (2) of the packaging machine (1) to the multi pack outlet (3) of the packaging machine (1) such that products supplied from the product inlet (2) of the packaging machine (1) can be transported through the film-packaging station to the multipack outlet (3) of the packaging machine (1), without passing through the cardboard-packaging station (4) or without being wrapped in cardboard material in the cardboard-packaging station (4), and therefore the products can be delivered at the multipack outlet (3) of the packaging machine (1) in the form of film multipacks,
**characterized in that**
the transporting device of the product bypass (6) has a first region (11), which is formed from at least one transporting belt and connects the cardboard-material outflow (8) of the cardboard-packaging station (4) to the multipack outlet (3) of the packaging machine (1), and a second region (12), which can be switched on optionally and, in the switched-on state, extends the first region (11) of the transporting device as far as the product inlet (2) of the packaging machine (1) or connects a product-inlet end region of the first region (11) of the transporting device to the product inlet (2) of the packaging machine (1).

2. Packaging machine (1) according to Claim 1,
wherein the cardboard-packaging station (4) comprises:
- a pack-feed means for feeding empty cardboard packs or, as an alternative, a packaging-material-feed means for feeding cardboard blanks;
- a product-feed means (7) for feeding products which are to be packaged in the cardboard-packaging station (4); and
- a cardboard-material outflow (8) for discharging products packaged in cardboard material in the cardboard-packaging station (4).

3. Packaging machine (1) according to Claim 2,
wherein the cardboard-packaging station (4) has a pack-feed means for feeding empty cardboard packs and also has a loading station, by means of which products fed via the product-feed means (7) are packaged into empty cardboard packs in order to form multipacks.

4. Packaging machine (1) according to Claim 2,
wherein the cardboard-packaging station (4) has a packaging-material-feed means for feeding cardboard blanks and also has folding elements, wherein the folding elements are adapted to form cardboard packs which at least partially envelop products fed via the product-feed means (7).

5. Packaging machine (1) according to one of Claims 1 to 4,
wherein the cardboard-packaging station (4) has a horizontal conveying device (13) for conveying products fed via the product-feed means (7) and for conveying empty cardboard packs or cardboard blanks and/or multipacks.

6. Packaging machine (1) according to one of Claims 1 to 5,
wherein the packaging machine (1) can be operated in a third operating mode, in which the transporting device of the product bypass (6) is adapted to connect the cardboard-material outflow (8) of the cardboard-packaging station (4) to the multipack outlet (3) of the packaging machine (1) such that products packaged in cardboard material in the cardboard-packaging station (4) can be transported to the multipack outlet (3) of the packaging machine (1), without passing through the film-packaging station (5) or without being wrapped in film material in the film-packaging station (5), and therefore the products packaged in cardboard material in the cardboard-packaging station (4) can be delivered at the multipack outlet (3) of the packaging machine (1) in the form of cardboard-tray multipacks; and
wherein the packaging machine (1) can be operated in a fourth operating mode, in which the transporting device of the product bypass (6) is adapted to connect the product inlet (2) of the packaging machine (1) to the multipack outlet (3) of the packaging machine (1) such that products supplied from the product inlet (2) of the packaging machine (1) can be transported to the multi-ipack outlet (3) of the packaging machine (1), without passing through the cardboard-packaging station (4) and the film-packaging station (5) or without being wrapped in cardboard material in the cardboard-packaging station (4) and without being wrapped in film material in the film-packaging station (5), and therefore the products supplied from the product inlet (2) of the packaging machine (1) can be delivered as such at the multipack outlet (3) of the packaging machine (1).

7. Packaging machine (1) according to one of Claims 1 to 6,
wherein the transporting device of the product bypass (6) is designed in the form of a telescopic transporting belt or has at least one telescopic transporting belt, wherein the second region (12) of the transporting device, which can be switched on optionally, is formed, at least in part, by a telescopic region of the telescopic transporting belt.

8. Packaging machine (1) according to one of Claims 1 to 7,
wherein the cardboard-packaging station (4) and/or the film-packaging station (5) are/is designed so as to be capable of being switched on and off optionally.

9. Packaging machine (1) according to one of Claims 1 to 8,
wherein those components of the cardboard-packaging station (4) which are provided in order to form the cardboard packs can be moved from a first, active position into a second, inactive position, and vice versa, such that, in the first, active position, products fed to the cardboard-packaging station (4) via the product-feed means (7) are wrapped in cardboard material in the cardboard-packaging station (4), and such that, in the second, inactive position, products fed to the cardboard-packaging station (4) via the product-feed means (7) are not wrapped in cardboard material in the cardboard-packaging station (4).

10. Packaging machine (1) according to one of Claims 1 to 9,
wherein the film-packaging station (5) has at least one strapping machine, adapted to wrap product units supplied by the film-packaging station (5) in film material which can be unwound from a supply roll.

11. Method of packaging products in cardboard material and/or film material with the aid of a packaging machine (1) according to one of the preceding claims, wherein the method includes the following method steps:
- in a first operating mode of the packaging machine (1), products supplied from the product inlet (2) of the packaging machine (1) are packaged in cardboard material in the cardboard-packaging station (4), the cardboard-material outflow (8) of the cardboard-packaging station (4) is connected to the multipack outlet (3) of the packaging station, with the aid of the transporting device of the product bypass (6), such that products packaged in cardboard material in the cardboard-packaging station (4) are transported through the film-packaging station (5) to the multipack outlet (3) of the packaging machine (1) and are delivered there in the form of cardboard-tray/film multipacks; and
- in a second operating mode of the packaging machine (1), the product inlet (2) of the packaging machine (1) is connected to the multipack outlet (3) of the packaging machine (1), with the aid of the transporting device of the product bypass (6), such that products supplied from the product inlet (2) of the packaging machine (1) are transported through the film-packaging station to the multipack outlet (3) of the packaging machine (1), without passing through the cardboard-packaging station or without being wrapped in cardboard material in the cardboard-packaging station (4), and therefore the products are delivered at the multipack outlet (3) of the packaging machine (1) in the form of film multipacks.

12. Method according to Claim 11,
wherein the method also includes the following method steps:
- in a third operating mode of the packaging machine (1), the cardboard-material outflow (8) of the cardboard-packaging station (4) is connected to the multipack outlet (3) of the packaging machine (1), with the aid of the transporting device of the product bypass (6), such that products packaged in cardboard material in the cardboard-packaging station are transported to the multipack outlet (3) of the packaging machine (1), without passing through the film-packaging station (5) or without being wrapped in film material in the film-packaging station (5), and therefore the products packaged in cardboard material in the cardboard-packaging station (4) are delivered at the multipack outlet (3) of the packaging machine (1) in the form of cardboard-tray multipacks; and
- in a fourth operating mode of the packaging machine (1), the product inlet (2) of the packaging machine (1) is connected to the multipack outlet (3) of the packaging machine (1), with the aid of the transporting device of the product bypass (6), such that products supplied from the product inlet (2) of the packaging machine (1) are transported to the multipack outlet (3) of the packaging machine (1), without passing through the cardboard-packaging station (4) and the film-packaging station (5) or without being wrapped in cardboard material in the cardboard-packaging station (4) and without being wrapped in film material in the film-packaging station (5), and therefore the products supplied from the product inlet (2) of the packaging machine (1) are delivered as such at the multipack outlet (3) of the packaging machine (1).

## Patentansprüche

1. Verpackungsmaschine (1) zum optionalen Verpacken von Produkten in Kartonmaterial und/oder Folienmaterial, wobei die Verpackungsmaschine (1) beinhaltet:
- einen eingangsseitigen Produkteinlass (2) zum Zuführen von zu verpackenden Produkten;
- einen ausgangsseitigen Mehrfachverpackungsausgang (3), der in Produkttransportrichtung (T) gesehen dem Produkteinlass (2) nachgeordnet und dazu ausgelegt ist, in der Verpackungsmaschine (1) gebildete Mehrfachverpackungen auszugeben;
- eine Kartonverpackungsstation (4), die zwischen dem Produkteinlass (2) und dem Mehrfachverpackungsausgang (3) angeordnet ist, und eine Folienverpackungsstation (5), die in Produkttransportrichtung (T) gesehen der Kartonverpackungsstation (4) nachgeordnet ist; und
- einen Produkt-Bypass (6), der dazu ausgelegt ist, Produkte an dem Produkteinlass (2) zuzuführen, die optional direkt der Folienverpackungsstation (5) zugeführt werden, wobei die Kartonverpackungsstation (4) im Prozess umgangen wird,
wobei der Produkt-Bypass (6) eine Transportvorrichtung mit zumindest einem Transportband (11, 12) aufweist, das dazu ausgelegt ist, vorzugsweise in der Produkttransportrichtung (T) in einem Kreislauf angetrieben zu werden; und
wobei die Verpackungsmaschine (1) in einem ersten Betriebsmodus betreibbar ist, wobei die Transportvorrichtung des Produkt-Bypasses (6) dazu ausgelegt ist, den Kartonmaterialausgang (8) der Kartonverpackungsstation (4) mit dem Mehrfachverpackungsausgang (3) der Verpackungsmaschine (1) zu verbinden, sodass in der Kartonverpackungsstation (4) in Kartonmaterial verpackte Produkte durch die Folienverpackungsstation (5) zu dem Mehrfachverpackungsausgang (3) der Verpackungsmaschine (1) transportiert werden können und dort in Form einer Kartonschalen-/Folien-Mehrfachverpackung ausgegeben werden können; und
wobei die Verpackungsmaschine (1) in einem zweiten Betriebsmodus betrieben werden kann, wobei die Transportvorrichtung des Produkt-Bypasses (6) dazu ausgelegt ist, den Produkteinlass (2) der Verpackungsmaschine (1) mit dem Mehrfachverpackungsausgang (3) der Verpackungsmaschine (1) zu verbinden, sodass von dem Produkteinlass (2) der Verpackungsmaschine (1) zugeführte Produkte durch die Folienverpackungsstation zu dem Mehrfachverpackungsausgang (3) der Verpackungsmaschine (1) transportiert werden können, ohne die Kartonverpackungsstation (4) zu durchlaufen oder ohne in der Kartonverpackungsstation (4) mit Kartonmaterial umhüllt zu werden, wodurch die Produkte an dem Mehrfachverpackungsausgang (3) der Verpackungsmaschine (1) in Form von Folien-Mehrfachverpackungen ausgegeben werden können,
**dadurch gekennzeichnet, dass**
die Transportvorrichtung des Produkt-Bypasses (6) einen ersten Bereich (11), der aus zumindest einem Transportband gebildet ist und den Kartonmaterialausgang (8) der Kartonverpackungsstation (4) mit dem Mehrfachverpackungsausgang (3) der Verpackungsmaschine (1) verbindet, und einen zweiten Bereich (12) aufweist, der optional eingeschaltet werden kann und in dem eingeschalteten Zustand den ersten Bereich (11) der Transportvorrichtung bis zu dem Produkteinlass (2) der Verpackungsmaschine (1) verlängert oder einen Produkteinlassendbereich des ersten Bereichs (11) der Transportvorrichtung mit dem Produkteinlass (2) der Verpackungsmaschine (1) verbindet.

2. Verpackungsmaschine (1) nach Anspruch 1,
wobei die Kartonverpackungsstation (4) aufweist:
- eine Packungszuführeinrichtung zum Zuführen von leeren Kartonpackungen oder alternativ eine Verpackungsmaterialzuführeinrichtung zum Zuführen von Kartonzuschnitten;
- eine Produktzuführeinrichtung (7) zum Zuführen von Produkten, die in der Kartonverpackungsstation (4) zu verpacken sind; und
- einen Kartonmaterialausgang (8) zum Ausgeben von in der Kartonverpackungsstation (4) in Kartonmaterial verpackten Produkten.

3. Verpackungsmaschine (1) nach Anspruch 2,
wobei die Kartonverpackungsstation (4) eine Packungszuführeinrichtung zum Zuführen von leeren Kartonpackungen sowie eine Beladestation aufweist, durch die über die Produktzuführeinrichtung (7) zugeführte Produkte in leere Kartonpackungen verpackt werden, um Mehrfachverpackungen zu bilden.

4. Verpackungsmaschine (1) nach Anspruch 2,
wobei die Kartonverpackungsstation (4) eine Verpackungsmaterialzuführeinrichtung zum Zuführen von Kartonzuschnitten sowie Faltelemente aufweist, wobei die Faltelemente zur Bildung von Kartonpackungen ausgelegt sind, die über die Produktzuführeinrichtung (7) zugeführte Produkte zumindest teilweise umhüllen.

5. Verpackungsmaschine (1) nach einem der Ansprüche 1 bis 4, wobei die Kartonverpackungsstation (4) eine horizontale Fördereinrichtung (13) zum Fördern von über die Produktzuführeinrichtung (7) zugeführten Produkten und zum Fördern von leeren Kartonpackungen oder Kartonzuschnitten und/oder Mehrfachverpackungen aufweist.

6. Verpackungsmaschine (1) nach einem der Ansprüche 1 bis 5, wobei die Verpackungsmaschine (1) in einem dritten Betriebsmodus betrieben werden kann, wobei die Transportvorrichtung des Produkt-Bypasses (6) dazu ausgelegt ist, den Kartonmaterialausgang (8) der Kartonverpackungsstation (4) mit dem Mehrfachverpackungsausgang (3) der Verpackungsmaschine (1) zu verbinden, sodass in der Kartonverpackungsstation (4) in Kartonmaterial verpackte Produkte zu dem Mehrfachverpackungsausgang (3) der Verpackungsmaschine (1) transportiert werden können, ohne die Folienverpackungsstation (5) zu durchlaufen oder ohne in der Folienverpackungsstation (5) mit Folienmaterial umhüllt zu werden, wodurch die in der Kartonverpackungsstation (4) in Kartonmaterial verpackten Produkte an dem Mehrfachverpackungsausgang (3) der Verpackungsmaschine (1) in Form von Kartonschalen-Mehrfachverpackungen ausgegeben werden können; und
wobei die Verpackungsmaschine (1) in einem vierten Betriebsmodus betrieben werden kann, wobei die Transportvorrichtung des Produkt-Bypasses (6) dazu ausgelegt ist, den Produkteinlass (2) der Verpackungsmaschine (1) mit dem Mehrfachverpackungsausgang (3) der Verpackungsmaschine (1) zu verbinden, sodass von dem Produkteinlass (2) der Verpackungsmaschine (1) zugeführte Produkte zu dem Mehrfachverpackungsausgang (3) der Verpackungsmaschine (1) transportiert werden können, ohne die Kartonverpackungsstation (4) und die Folienverpackungsstation (5) zu durchlaufen oder ohne in der Kartonverpackungsstation (4) mit Kartonmaterial und in der Folienverpackungsstation (5) mit Folienmaterial umhüllt zu werden, wodurch von dem Produkteinlass (2) der Verpackungsmaschine (1) zugeführten Produkte unverändert an dem Mehrfachverpackungsausgang (3) der Verpackungsmaschine (1) ausgegeben werden können.

7. Verpackungsmaschine (1) nach einem der Ansprüche 1 bis 6, wobei die Transportvorrichtung des Produkt-Bypasses (6) in Form eines Teleskoptransportbands entworfen ist oder zumindest ein Teleskoptransportband aufweist, wobei der zweite, optional einschaltbare Bereich (12) der Transportvorrichtung zumindest teilweise durch einen Teleskopbereich des Teleskoptransportbandes gebildet ist.

8. Verpackungsmaschine (1) nach einem der Ansprüche 1 bis 7, wobei die Kartonverpackungsstation (4) und/oder die Folienverpackungsstation (5) so entworfen sind, dass sie optional ein- und ausgeschaltet werden können.

9. Verpackungsmaschine (1) nach einem der Ansprüche 1 bis 8, wobei diejenigen Komponenten der Kartonverpackungsstation (4), die zur Bildung der Kartonpackungen vorgesehen sind, von einer ersten, aktiven Position in eine zweite, inaktive Position bewegt werden können und umgekehrt, sodass in der ersten, aktiven Position Produkte, die der Kartonverpackungsstation (4) über die Produktzuführeinrichtung (7) zugeführt werden, in der Kartonverpackungsstation (4) mit Kartonmaterial umhüllt werden, und sodass in der zweiten, inaktiven Position Produkte, die der Kartonverpackungsstation (4) über die Produktzuführeinrichtung (7) zugeführt werden in der Kartonverpackungsstation (4) nicht mit Kartonmaterial umhüllt werden.

10. Verpackungsmaschine (1) nach einem der Ansprüche 1 bis 9, wobei die Folienverpackungsstation (5) zumindest eine Umreifungsmaschine aufweist, die dazu ausgelegt ist, von der Folienverpackungsstation (5) zugeführte Produkteinheiten mit Folienmaterial zu umhüllen, das von einer Vorratsrolle abgewickelt werden kann.

11. Verfahren zum Verpacken von Produkten in Kartonmaterial und/oder Folienmaterial mithilfe einer
Verpackungsmaschine (1) nach einem der vorhergehenden Ansprüche, wobei das Verfahren folgende Verfahrensschritte beinhaltet:
- in einem ersten Betriebsmodus der Verpackungsmaschine (1) werden von dem Produkteinlass (2) der Verpackungsmaschine (1) zugeführte Produkte in der Kartonverpackungsstation (4) in Kartonmaterial verpackt, wobei der Kartonmaterialausgang (8) der Kartonverpackungsstation (4) mithilfe der Transportvorrichtung des Produkt-Bypasses (6) mit dem Mehrfachverpackungsausgang (3) der Verpackungsstation verbunden ist, sodass in der Kartonverpackungsstation (4) in Kartonmaterial verpackte Produkte durch die Folienverpackungsstation (5) zu dem Mehrfachverpackungsausgang (3) der Verpackungsmaschine (1) transportiert werden und dort in Form von Kartonschalen-/Folien-Mehrfachverpackungen ausgegeben werden; und
- in einem zweiten Betriebsmodus der Verpackungsmaschine (1) ist der Produkteinlass (2) der Verpackungsmaschine (1) mithilfe der Transportvorrichtung des Produkt-Bypasses (6) mit der Mehrfachverpackungsausgang (3) der Verpackungsmaschine (1) verbunden, sodass von dem Produkteinlass (2) der Verpackungsmaschine (1) zugeführte Produkte durch die Folienverpackungsstation zu dem Mehrfachverpackungsausgang (3) der Verpackungsmaschine (1) transportiert werden, ohne die Kartonverpackungsstation zu durchlaufen oder ohne in der Kartonverpackungsstation (4) mit Kartonmaterial umhüllt zu werden, wodurch die Produkte an dem Mehrfachverpackungsausgang (3) der Verpackungsmaschine (1) in Form von Folien-Mehrfachverpackungen ausgegeben werden.

12. Verfahren nach Anspruch 11,
wobei das Verfahren darüber hinaus die folgenden Verfahrensschritte beinhaltet:
- in einem dritten Betriebsmodus der Verpackungsmaschine (1) ist der Kartonmaterialausgang (8) der Kartonverpackungsstation (4) mithilfe der Transportvorrichtung des Produkt-Bypasses (6) mit dem Mehrfachverpackungsausgang (3) der Verpackungsmaschine (1) verbunden, sodass in der Kartonverpackungsstation in Kartonmaterial verpackte Produkte zu dem Mehrfachverpackungsausgang (3) der Verpackungsmaschine (1) transportiert werden, ohne die Folienverpackungsstation (5) zu durchlaufen oder ohne in der Folienverpackungsstation (5) mit Folienmaterial umhüllt zu werden, wodurch die in der Kartonverpackungsstation (4) in Kartonmaterial verpackten Produkte an dem Mehrfachverpackungsausgang (3) der Verpackungsmaschine (1) in Form von Kartonschalen-Mehrfachverpackungen ausgegeben werden; und
- in einem vierten Betriebsmodus der Verpackungsmaschine (1) ist der Produkteinlass (2) der Verpackungsmaschine (1) mithilfe der Transportvorrichtung des Produkt-Bypasses (6) mit dem Mehrfachverpackungsausgang (3) der Verpackungsmaschine (1) verbunden, sodass von dem Produkteinlass (2) der Verpackungsmaschine (1) zugeführte Produkte zu dem Mehrfachverpackungsausgang (3) der Verpackungsmaschine (1) transportiert werden, ohne die Kartonverpackungsstation (4) und die Folienverpackungsstation (5) zu durchlaufen oder ohne in der Kartonverpackungsstation (4) mit Kartonmaterial und ohne in der Folienverpackungsstation (5) mit Folienmaterial umwickelt zu werden, wodurch die von dem Produkteinlass (2) der Verpackungsmaschine (1) zugeführten Produkte unverändert an dem Mehrfachverpackungsausgang (3) der Verpackungsmaschine (1) ausgegeben werden.

## Revendications

1. Machine d'emballage (1) pour éventuellement l'emballage de produits dans un matériau en carton et/ou un matériau en film, dans laquelle la machine d'emballage (1) comprend :
- une entrée de produit côté entrée (2) pour la fourniture de produits qui doivent être emballés ;
- une sortie d'emballage multiple côté sortie (3) agencée en aval de l'entrée de produit (2), comme vu dans la direction de transport de produit (T), et adaptée pour délivrer des emballages multiples formés dans la machine d'emballage (1) ;
- un poste d'emballage en carton (4), qui est agencé entre l'entrée de produit (2) et la sortie d'emballage multiple (3), et un poste d'emballage en film (5) agencé en aval du poste d'emballage en carton (4), comme vu dans la direction de transport de produit (T) ; et
- un contournement de produit (6), adapté pour fournir des produits au niveau de l'entrée de produit (2) qui sont éventuellement alimentés directement au poste d'emballage en film (5), en contournant le poste d'emballage en carton (4) dans le processus,
dans laquelle le contournement de produit (6) a un dispositif de transport avec au moins une bande de transport (11, 12) qui est adaptée pour être entraînée de préférence en circulation dans la direction de transport de produit (T) ; et
dans laquelle la machine d'emballage (1) peut fonctionner dans un premier mode de fonctionnement dans lequel le dispositif de transport du contournement de produit (6) est adapté pour relier la sortie de matériau en carton (8) du poste d'emballage en carton (4) à la sortie d'emballage multiple (3) de la machine d'emballage (1) de sorte que les produits emballés dans du matériau en carton dans le poste d'emballage en carton (4) peuvent être transportés à travers le poste d'emballage multiple (5) vers la sortie d'emballage multiple (3) de la machine d'emballage (1) et peuvent être délivrés là sous la forme d'un emballage multiple en film/barquette en carton ; et
dans laquelle la machine d'emballage (1) peut fonctionner dans un deuxième mode de fonctionnement, dans lequel le dispositif de transport du contournement de produit (6) est adapté pour relier l'entrée de produit (2) de la machine d'emballage (1) à la sortie d'emballage multiple (3) de la machine d'emballage (1) de sorte que les produits fournis à partir de l'entrée de produit (2) de la machine d'emballage (1) peuvent être transportés à travers le poste d'emballage en film vers la sortie d'emballage multiple (3) de la machine d'emballage (1), sans le passage par le poste d'emballage en carton (4) ou sans être enveloppé dans un matériau en carton dans le poste d'emballage en carton (4), et par conséquent, les produits peuvent être délivrés à la sortie d'emballage multiple (3) de la machine d'emballage (1) sous la forme d'emballages multiples en film,
**caractérisée en ce que**
le dispositif de transport du contournement de produit (6) a une première zone (11), qui est formée à partir d'au moins une bande de transport et qui relie la sortie de matériau en carton (8) du poste d'emballage en carton (4) à la sortie d'emballage multiple (3) de la machine d'emballage (1), et une seconde zone (12), qui peut être allumée de manière facultative et, dans l'état allumé, étend la première zone (11) du dispositif de transport jusqu'à l'entrée de produit (2) de la machine d'emballage (1) ou relie une zone d'extrémité d'entrée de produit de la première zone (11) du dispositif de transport à l'entrée de produit (2) de la machine d'emballage (1).

2. Machine d'emballage (1) selon la revendication 1,
dans laquelle le poste d'emballage en carton (4) comprend :
- un moyen d'alimentation en emballages pour l'alimentation des emballages en carton vides ou, en variante, un moyen d'alimentation en matériau d'emballage pour l'alimentation des découpes en carton ;
- un moyen d'alimentation en produits (7) pour l'alimentation des produits qui doivent être emballés dans le poste d'emballage en carton (4) ; et
- une sortie de matériau en carton (8) pour le déchargement des produits emballés dans du matériau en carton dans le poste d'emballage en carton (4).

3. Machine d'emballage (1) selon la revendication 2,
dans laquelle le poste d'emballage en carton (4) a un moyen d'alimentation en emballages pour l'alimentation des emballages en carton vides et a également un poste de chargement, au moyen duquel des produits alimentés via le moyen d'alimentation en produits (7) sont emballés dans des emballages en carton vides pour former des emballages multiples.

4. Machine d'emballage (1) selon la revendication 2,
dans laquelle le poste d'emballage en carton (4) a un moyen d'alimentation en matériau d'emballage pour l'alimentation des découpes de carton et a également des éléments de pliage, dans laquelle les éléments de pliage sont adaptés pour former des emballages en carton qui enveloppent au moins partiellement des produits alimentés via le moyen d'alimentation en produits (7).

5. Machine d'emballage (1) selon l'une quelconque des revendications 1 à 4,
dans laquelle le poste d'emballage en carton (4) a un dispositif de transport horizontal (13) pour le transport des produits alimentés via le moyen d'alimentation en produits (7) et pour le transport des emballages en carton vides ou des découpes en carton et/ou des emballages multiples.

6. Machine d'emballage (1) selon l'une quelconque des revendications 1 à 5,
dans laquelle la machine d'emballage (1) peut fonctionner dans un troisième mode de fonctionnement, dans lequel le dispositif de transport du contournement de produit (6) est adapté pour relier la sortie de matériau en carton (8) du poste d'emballage en carton (4) à la sortie d'emballage multiple (3) de la machine d'emballage (1) de sorte que les produits emballés dans le matériau en carton dans le poste d'emballage en carton (4) peuvent être transportés vers la sortie d'emballage multiple (3) de la machine d'emballage (1), sans passage à travers le poste d'emballage en film (5) ou sans être enveloppé dans un matériau en film dans le poste d'emballage en film (5), et par conséquent les produits emballés dans du matériau en carton dans le poste d'emballage en carton (4) peuvent être délivrés au niveau de la sortie d'emballage multiple (3) de la machine d'emballage (1) sous la forme d'emballages multiples de barquettes en carton ; et
dans laquelle la machine d'emballage (1) peut être actionnée dans un quatrième mode de fonctionnement, dans lequel le dispositif de transport du contournement de produit (6) est adapté pour relier l'entrée de produit (2) de la machine d'emballage (1) à la sortie d'emballage multiple (3) de la machine d'emballage (1) de sorte que les produits fournis à partir de l'entrée de produit (2) de la machine d'emballage (1) peuvent être transportés vers la sortie d'emballage multiple (3) de la machine d'emballage (1), sans passage par le poste d'emballage en carton (4) et le poste d'emballage en film (5) ou sans être enveloppé dans du matériau en carton dans le poste d'emballage en carton (4) et sans être enveloppé dans du matériau en film dans le poste d'emballage en film (5), et par conséquent, les produits fournis à partir de l'entrée de produit (2) de la machine d'emballage (1) peuvent être délivrés tels quels au niveau de la sortie d'emballage multiple (3) de la machine d'emballage (1).

7. Machine d'emballage (1) selon l'une quelconque des revendications 1 à 6,
dans laquelle le dispositif de transport du contournement de produit (6) est conçu sous la forme d'une bande de transport télescopique ou comporte au moins une bande de transport télescopique, dans laquelle la deuxième zone (12) du dispositif de transport, qui peut être éventuellement allumée, est formée, au moins en partie, par une zone télescopique de la bande de transport télescopique.

8. Machine d'emballage (1) selon l'une quelconque des revendications 1 à 7,
dans laquelle le poste d'emballage en carton (4) et/ou le poste d'emballage en film (5) sont/est conçus de manière à pouvoir être éventuellement allumés et éteints.

9. Machine d'emballage (1) selon l'une quelconque des revendications 1 à 8,
dans laquelle ces composants du poste d'emballage en carton (4) qui sont fournis afin de former les emballages en carton peuvent être déplacés à partir d'une première position active dans une seconde position inactive, et vice versa, de sorte que, dans la première position active, les produits alimentés jusqu'au poste d'emballage en carton (4) via le moyen d'alimentation en produits (7) sont enveloppés dans du matériau en carton dans le poste d'emballage en carton (4), et de sorte que, dans la seconde position inactive, les produits alimentés vers le poste d'emballage en carton (4) via le moyen d'alimentation en produits (7) ne sont pas enveloppés dans du matériau en carton dans le poste d'emballage en carton (4).

10. Machine d'emballage (1) selon l'une quelconque des revendications 1 à 9,
dans laquelle le poste d'emballage en film (5) a au moins une machine de cerclage, adaptée pour envelopper des unités de produit fournies par le poste d'emballage en film (5) dans un matériau en film qui peut être déroulé à partir d'un rouleau d'alimentation.

11. Procédé d'emballage de produits en carton et/ou en film à l'aide d'une machine d'emballage (1) selon l'une quelconque des revendications précédentes, dans lequel le procédé comprend les étapes suivantes :
- dans un premier mode de fonctionnement de la machine d'emballage (1), les produits fournis à partir de l'entrée de produit (2) de la machine d'emballage (1) sont emballés dans un matériau en carton dans le poste d'emballage en carton (4), la sortie de matériau en carton (8) du poste d'emballage en carton (4) est reliée à la sortie d'emballage multiple (3) du poste d'emballage, à l'aide du dispositif de transport du contournement de produit (6), de sorte que des produits emballés dans du matériau en carton dans le poste d'emballage en carton (4) sont transportés à travers le poste d'emballage en film (5) vers la sortie d'emballage multiple (3) de la machine d'emballage (1) et y sont délivrés là sous la forme d'emballages multiples de barquettes en carton/en film ; et
- dans un deuxième mode de fonctionnement de la machine d'emballage (1), l'entrée de produit (2) de la machine d'emballage (1) est reliée à la sortie d'emballage multiple (3) de la machine d'emballage (1), à l'aide du dispositif de transport du contournement de produit (6), de sorte que les produits fournis à partir de l'entrée de produit (2) de la machine d'emballage (1) sont transportés à travers le poste d'emballage en film vers la sortie d'emballage multiple (3) de la machine d'emballage (1), sans passage par le poste d'emballage en carton ou sans être enveloppés dans un matériau en carton dans le poste d'emballage en carton (4), et par conséquent, les produits sont délivrés au niveau de la sortie d'emballage multiple (3) de la machine d'emballage (1) sous la forme d'emballages multiples en film.

12. Procédé selon la revendication 11,
dans lequel le procédé comprend également les étapes de procédé suivantes :
- dans un troisième mode de fonctionnement de la machine d'emballage (1), la sortie de matériau en carton (8) du poste d'emballage en carton (4) est reliée à la sortie d'emballage multiple (3) de la machine d'emballage (1), à l'aide du dispositif de transport du contournement de produit (6), de sorte que les produits emballés dans le matériau en carton dans le poste d'emballage en carton sont transportés vers la sortie d'emballage multiple (3) de la machine d'emballage (1), sans passage à travers le poste d'emballage en film (5) ou sans être enveloppés dans un matériau en film dans le poste d'emballage en film (5), et par conséquent les produits emballés dans un matériau en carton dans le poste d'emballage en carton (4) sont délivrés au niveau de la sortie d'emballage multiple (3) de la machine d'emballage (1) sous la forme d'emballages multiples de barquettes en carton ; et
- dans un quatrième mode de fonctionnement de la machine d'emballage (1), l'entrée de produit (2) de la machine d'emballage (1) est reliée à la sortie d'emballage multiple (3) de la machine d'emballage (1), à l'aide du dispositif de transport du contournement de produit (6), de sorte que les produits fournis à partir de l'entrée de produit (2) de la machine d'emballage (1) sont transportés vers la sortie d'emballage multiple (3) de la machine d'emballage (1),
sans passage à travers le poste d'emballage en carton (4) et le poste d'emballage en film (5) ou sans être enveloppés dans un matériau en carton dans le poste d'emballage en carton (4) et sans être enveloppés dans un matériau en film dans le poste d'emballage en film (5), et par conséquent les produits fournis à partir de l'entrée de produit (2) de la machine d'emballage (1) sont délivrés tels quels au niveau de la sortie d'emballage multiple (3) de la machine d'emballage (1).
